# EUROPEAN PATENT SPECIFICATION

(11) **EP 2 499 569 B1**
(45) Date of publication and mention of the grant of the patent: **01.05.2019**
(21) Application number: 10830380.1
(22) Date of filing: 01.10.2010
(51) Int. Cl.: G06F 9/46, G06F 17/30

(54) **CLUSTERING METHOD AND SYSTEM**
CLUSTERING-VERFAHREN UND -SYSTEM
PROCÉDÉ ET SYSTÈME DE REGROUPEMENT

(30) Priority: 10.11.2009 CN 200910211714
(43) Date of publication of application: 19.09.2012
(73) Proprietor: Alibaba Group Holding Limited, Grand Cayman (KY)
(72) Inventor: ZHANG, Tao, Hangzhou 310013 (CN); GUO, Jiaqing, Hangzhou 310013 (CN)
(74) Representative: Grünecker Patent- und Rechtsanwälte PartG mbB
(86) International application number: PCT/US2010/051069
(87) International publication number: WO 2011/059588

(56) References cited:
- US-A- 5 857 179
- US-A1- 2002 016 787
- US-A1- 2005 044 487
- US-B1- 6 895 552

## Description

### CROSS REFERENCE TO RELATED PATENT APPLICATIONS

This application claims priority from Chinese Patent Application No. 200910211714.6 filed on 10 November 2009, entitled "CLUSTERING METHOD AND SYSTEM,".

### TECHNICAL FIELD

The present disclosure relates to data processing field, and especially relates to a clustering method and system.

### BACKGROUND

In data processing, clustering generally refers to classifying a set of physical or abstract objects into several classes composed of similar objects. A cluster generated by clustering is a set of data objects. These objects are similar to one another in the same cluster, but are different from objects in other clusters. For identification of large volume of readable files, clustering calculation often required, e.g., classifying different readable files into different classes according to different thresholds to determine readable files of the same class and realize clustering of similar files.

Under current technologies, the process of clustering of mass files is generally as follows. Firstly, the readable files are vectored based on different methods, and using a comparison result for similarity degree of different vectors as a basis for clustering. The vectorization refers to converting a readable file (such as a word document) to a vector composed of a series of numbers, each number representing a characteristic value corresponding to a respective characteristic. Different readable files have different corresponding vectors. Next, when clustering according to vector similarity degrees, the current technologies generally compare the files one by one. For example, when there are 100 readable files to be clustered, the vector similarity degree of each readable file with respect to the other 99 files needs to be computed so that the clustering can be performed according to the vector similarity degrees.

Given the above process, the current technologies' clustering method needs to compute the vector similarity degree of each readable file. The clustering analysis is based on such vector similarity degrees. When there is a huge amount of data of the readable files, such repeated computation often results in increased computation time, and thus seriously reduces performance. In other words, the amount of system resources occupied by the computation before clustering almost exceeds that of the clustering process itself.

In general, an urgent technology question before one of ordinary skill in the art is thus: how to creatively submit a clustering method to resolve the current problem that each readable file requires the computation of vector similarity degree with respect to the other files for the clustering that results in increased computation time for clustering and low performance of cluster computation.

US 5 857 179 relates to a computer method and apparatus for determining keywords of documents. An initial document by term matrix is formed, each document being represented by a respective M dimensional vector, where M represents the number of terms or words in a predetermined domain of documents. The dimensionality of the initial matrix is reduced to form resultant vectors of the documents. The resultant vectors are then clustered such that correlated documents are grouped into respective clusters. For each cluster, the terms having greatest impact on the documents in that cluster are identified. The identified terms represent key words of each document in that cluster. Further, the identified terms form a cluster summary indicative of the documents in that cluster.

### SUMMARY OF THE DISCLOSURE

It is the object of the present invention to provide an improved clustering method and an improved clustering system.

The object is solved by the subject matter of the independent claims.

Preferred embodiments of the present invention are defined by the dependent claims.

The goal of the present disclosure is to provide a clustering method to solve the problem that each readable file requires the computation of a respective vector similarity degree with respect to the other files for clustering, thereby resulting in increased computation time for clustering and low performance of cluster computation. The present disclosure provides a clustering system to accomplish such goal. In addition, the present disclosure also provides a clustering method.

In one aspect, a clustering method may comprise: vectorizing a plurality of readable files to obtain a plurality of file vectors each corresponding to a respective one of the readable files; obtaining a total characteristic vector based on the file vectors; and clustering the readable files based on a ranking result of a respective similarity degree between the total characteristic vector and each of the file vectors.

The obtaining the total characteristic vector based on the file vectors may comprise summing respective values of a common characteristic of the file vectors to obtain a corresponding characteristic value of a total characteristic vector.
The clustering the readable files based on the ranking result of the respective similarity degree between the total characteristic vector and each of the file vectors may comprise: calculating a respective first similarity degree between each of the file vectors and the total characteristic vector; performing a first ranking of the file vectors according to the first similarity degrees; calculating a respective second similarity degree between each of the file vectors and a last file vector after the first ranking; performing a second ranking of the file vectors ranked after the first ranking according to the second similarity degrees; and clustering the readable files according to the file vectors ranked after the second ranking.
The clustering the readable files according to the file vectors ranked after the second ranking may comprise: for each of the ranked file vectors starting from a second file vector after the second ranking, comparing a current file vector with its preceding file vector to provide a respective comparison result; when the comparison result satisfies a clustering condition, clustering the current file vector and its preceding file vector as a same class; and when the comparison result does not satisfy the clustering condition, generating a new class. At least one respective first similarity degree or second similarity degree may be calculated using a vector angular cosine formula.

The clustering the readable files based on the ranking result of the respective similarity degree between the total characteristic vector and each of the file vectors may comprise: obtaining a representative vector for each class of a plurality of classes of the readable files according to the clustering of the readable files; constructing a new characteristic vector satisfying a preset condition; calculating a respective third similarity degree between the representative vector of each class and the new characteristic vector; performing a first ranking of each class of the readable files according to the third similarity degrees; calculating a respective fourth similarity degree between the representative vector of each class and a representative vector of a last class after the first ranking; performing a second ranking of the representative vectors after the first ranking according to the fourth similarity degrees; and re-clustering the classes of the readable files according to the representative vectors after the second ranking.

The re-clustering the classes of the readable files according to the representative vectors after the second ranking may comprise: determining whether an iteration termination condition is satisfied; if the iteration termination condition is satisfied, terminating the clustering method; and if the iteration termination condition is not satisfied, iterating prior steps to obtain the representative vector of each class according to the clustering of the readable files.

In another aspect, a system for clustering may comprise: a vectorization unit that vectorizes a plurality of readable files to obtain a plurality of file vectors each of which corresponding to a respective one of the readable files; an extraction unit that obtains a total characteristic vector based on the file vectors; and a clustering unit that clusters the readable files into a plurality of classes of the readable files based on a ranking result of a respective similarity degree between the total characteristic vector and each of the file vectors.

The extraction unit may sum respective values of a common characteristic of the file vectors to obtain a characteristic value corresponding to the total characteristic vector.

The clustering unit may comprise: a first calculation unit that calculates a respective first similarity degree between each of the file vectors and the total characteristic vector; a first ranking unit that performs a first ranking of the file vectors according to the first similarity degrees; a second calculation unit that calculates a respective second similarity degree between each of the file vectors and a last file vector after the first ranking; a second ranking unit that performs a second ranking of the ranked file vectors after the first ranking; and a second clustering unit that clusters the readable files according to the file vectors ranked after the second ranking.

The second clustering unit may comprise: a comparison sub-unit that compares, for each of the ranked file vectors starting from a second file vector after the second ranking, a current file vector with its preceding file vector to provide a respective comparison result; a clustering sub-unit that, when the comparison result satisfies a clustering condition, clusters the current file vector and its preceding file vector as a class; and a generation sub-unit that, when the comparison result does not satisfy the clustering condition, generates a new class.

The system may further comprise: a retrieval unit that retrieves a representative vector of each class of the plurality of classes of the readable files; a construction unit that provides a new characteristic vector satisfying a preset condition; a third calculation unit that calculates a respective third similarity degree between the representative vector of each class and the new characteristic vector; a third ranking unit that performs a first ranking of each class of the readable files according to the third similarity degrees; a fourth calculation unit that calculates a respective fourth similarity degree between the representative vector of each class and a representative vector of a last class after the first ranking; a fourth ranking unit that performs a second ranking of the ranked representative vectors after the first ranking; and a third clustering unit that re-clusters the classes of the readable files according to the representative vectors after the second ranking.

Alternatively, the system may further comprise a determination unit that determines whether an iteration termination condition is satisfied, finishes a clustering process if the iteration termination condition is satisfied, and causes iteration of the clustering process to obtain a respective representative vector for each class if the iteration termination condition is not satisfied.

In yet another aspect, a method for clustering webpages may comprise: retrieving a plurality of webpages; vectorizing the webpages obtain a plurality of webpage vectors each of which corresponding to a respective one of the webpages; obtaining a total webpage characteristic vector of the webpages according to the webpage vectors; and clustering the webpages according to a respective similarity degree between the total webpage characteristic vector and each of the webpage vectors.

The method may further comprise establishing a category index according to the clustering of the webpages, the category index identifying one or more classes of webpages. Additionally, the method may further comprise searching in a respective class of webpages according to the category index in response to receiving a query word from a user.

Alternatively, the method may further comprise: selecting a respective center webpage from each class of webpages; and establishing a connection between the respective center webpage and webpages other than the respective center webpage in each respective class. Additionally, the method may further comprise returning a representative webpage of each class to the user in response to receiving the query word from the user.

In still another aspect, a system for clustering webpages may comprise: a retrieval unit that retrieves multiple webpages to be clustered; and a webpage clustering apparatus that vectorizes the webpages to obtain multiple webpage vectors each of which corresponding to a respective one of the webpages, obtains a total webpage characteristic vector according to the webpage vectors, clusters the webpages according to a respective similarity degree between the total webpage characteristic vector and each of the webpage vectors.

The system may further comprise an index establishment unit that establishes a category index according to the clustering of the webpages, the category index identifying one or more classes of webpages. Additionally, the system may further comprise a searching unit that, when receiving a query word from a user, searches a respective class of webpages according to the category index.

Alternatively, the system may further comprise a selection unit that selects a representative webpage from each class of webpages, and establishes a connection between the representative webpage and webpages other than a respective center webpage in each class.

Still alternatively, the system may further comprise a returning unit that returns the representative webpage of each class to the user in response to receiving the query word from the user.

The technique provided in the present disclosure vectorizes multiple readable files to obtain multiple file vectors corresponding to the multiple readable files, extracts a total characteristic vector based on the multiple file vectors, and clusters the multiple files based on a ranking result of a respective similarity degree between the total characteristic vector and each of the multiple file vectors. In an embodiment of the present disclosure, the similarity degree between each file vector and the total characteristic vector is used as a basis for clustering, without the need of computing similarity degree for pair-wise comparison of the readable files, thereby reducing the number of times of comparing similarity degrees between file vectors, and further reducing a burden of system resources, such as usage of CPU and memory, reducing run time of clustering, and improving the performance of clustering. A product implementing the present disclosure does not need to achieve all of the above advantages.

### DESCRIPTION OF DRAWINGS

The following is a brief introduction of Figures to be used in description of the disclosed embodiments or the existing technologies. The following Figures only relate to some embodiments of the present disclosure. A person of ordinary skill in the art can obtain other figures according to the following Figures without creative efforts. All such embodiments are within the protection scope of the present disclosure.
Figure 1 illustrates a flow chart of an embodiment 1 of a clustering method in accordance with the present disclosure.
Figure 2 illustrates a flow chart of an embodiment 2 of a clustering method in accordance with the present disclosure.
Figure 3 illustrates a flow chart of an embodiment 3 of a clustering method in accordance with the present disclosure.
Figure 4 illustrates a diagram of an embodiment 1 of a clustering system in accordance with the present disclosure.
Figure 5 illustrates a diagram of an embodiment 2 of a clustering system in accordance with the present disclosure.
Figure 6 illustrates a diagram of an embodiment 3 of a clustering system in accordance with the present disclosure.
Figure 7 illustrates a flow chart of an embodiment of a method for clustering webpages in accordance with the present disclosure.
Figure 8 illustrates a flow chart of another embodiment of a method for clustering webpages in accordance with the present disclosure.
Figure 9 illustrates a diagram of an embodiment of a system for clustering webpages in accordance with the present disclosure.
Figure 10 illustrates a diagram of another embodiment of a system for clustering webpages in accordance with the present disclosure.

### DETAILED DESCRIPTION

The present disclosure may be used in an environment or in a configuration of universal or specialized computer systems. Examples include a personal computer, a server computer, a handheld device or a portable device, a tablet device, a multiprocessor system, and a distributed computing environment including any system or device above.

The present disclosure may be described within a general context of computer-executable instructions executed by a computer, such as a program module. Generally, a program module includes routines, programs, objects, modules, and data structure, etc., for executing specific tasks or implementing specific abstract data types. The present disclosure may also be implemented in a distributed computing environment. In a distributed computing environment, a task is executed by remote processing devices which are connected through a communication network. In the distributed computing environment, the program module may be located in one or more computer-readable storage media (which may include storage devices) of one or more local and remote computers.

A technique of the present disclosure firstly vectorizes multiple readable files to obtain multiple file vectors each of which corresponding to a respective one of the multiple readable files, forms a characteristic vector based on common characteristics of the multiple file vectors, and then clusters the multiple files based on a respective similarity degree between the characteristic vector and each of the multiple file vectors, thereby avoiding computing similarity degrees for pair-wise comparison of the readable files. The present disclosure implements clustering of readable files based on the formed characteristic vector, thereby improving performance of the clustering based on reduced number of times of similarity degree comparison.

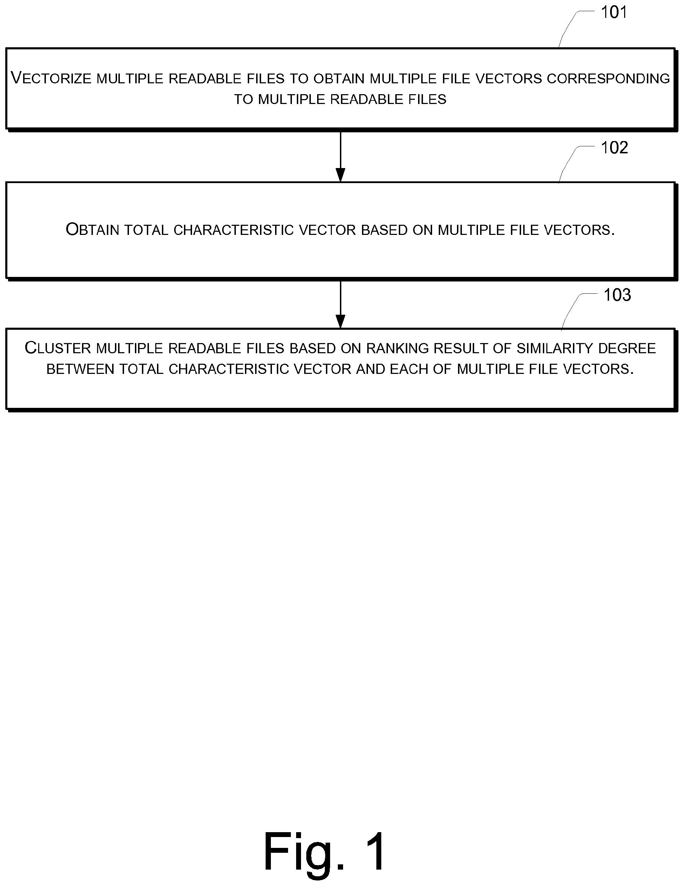

Figure 1 illustrates a flow chart of an embodiment 1 of a clustering method which is described below.

At 101, the method vectorizes multiple readable files to obtain multiple file vectors each of which corresponding to a respective one of the multiple readable files.

In this embodiment, a readable file can be a file of any format convertible into a vector, such as a Word document, an Excel spreadsheet, and so on. The present disclosure firstly vectorizes the multiple readable files to convert each of the multiple readable files into a corresponding multiple file vector. In one embodiment, vectorization refers to converting a given readable file into a vector composed of a series of numbers, each number representing a value corresponding to a respective characteristic. There are many methods based on which the characteristic of the readable file can be chosen. One typical method is to use a term frequency-inverse document frequency (TF-IDF) method to obtain the characteristic value of the readable file. Other methods may also be used, such as an information gain (IG), a mutual information (MI), and an entropy method. Finally the obtained characteristic value is composed into the vector comprising a series of number. Different readable files have different corresponding vectors. The file vector in the present disclosure refers to a vector. The reason that it is called file vector is to distinguish from the characteristic vector below.

At 102, the method obtains a total characteristic vector based on the multiple file vectors.

After obtaining the multiple file vectors of the multiple files, the present disclosure obtains the total characteristic vector based on the multiple file vectors. The total characteristic vector is the characteristic vector that includes all characteristics of the readable files. In practical application, when constructing the total characteristic vector, all characteristics of the readable files are extracted, and then a vector including all characteristics of the readable files is generated as the characteristic value. It can be generated by summing the characteristic values of all readable files and using the sum as the characteristic value of the total characteristic vector. The characteristic of a given readable file can be understood as a minimum acceptable unit in the readable file, such as a word or a number. A detailed characteristic may be different depending on the characteristic selection algorithm. The characteristic vector constructed in this step can guarantee that a similarity degree value cannot be 0 when comparing the file vector and the characteristic vector, thereby guaranteeing similar file vectors can be ranked in order.

At 103, the method clusters the multiple readable files based on a ranking result of a respective similarity degree between the total characteristic vector and each of the multiple file vectors.

In one embodiment, this step comprises calculating a respective similarity degree between the total characteristic vector and each of the multiple file vectors and clustering the multiple readable files. Specifically, the readable files can be ranked according to the calculated multiple similarity degrees, and adjacent readable files are clustered according to actual situation or requirement. In this embodiment, a successive comparison method can be used, e.g., every file vector only needs to be compared for similarity with its preceding vector to provide a respective comparison result. When presetting a threshold, this step can set up the threshold as 0.99, e.g., when the similarity degree between two files is equal to or higher than 0.99, the two files are clustered in a same class, otherwise a new class is generated. Finally, all vectors corresponding to all readable files are clustered. The comparison of vector similarity degrees can be based on different vector similarity calculation formulas in mathematics. Different formulas can derive different calculation methods for the similarity degree.

It is appreciated that an application of the clustering method in this embodiment can use centric-iterative-like calculation method such as K-means clustering algorithm, or high-dimension to low-dimension method such as projection pursuit method, self-organizing feature map algorithm, and so on. Any of the two methods can resolve the clustering problem in the embodiment of this present disclosure.

In this embodiment, before clustering, all the file vectors of all the readable files are combined to generate the total characteristic vector. Such total characteristic vector is a vector that can include all characteristics of all vectors. Accordingly, after calculation of the respective similarity degree between each file vector and the total characteristic vector, the multiple readable files are ranked according to the similarity degrees. Then according to a principle of successive comparison, the clustering is performed according to the similarity degree between two adjacent file vectors. Thus each file vector is only compared with its adjacent file vectors, thereby reducing the number of times of comparison of similarity degrees between file vectors. This advantageously results in reduced usage of CPU and memory, reduced run time, and improved computing performance.

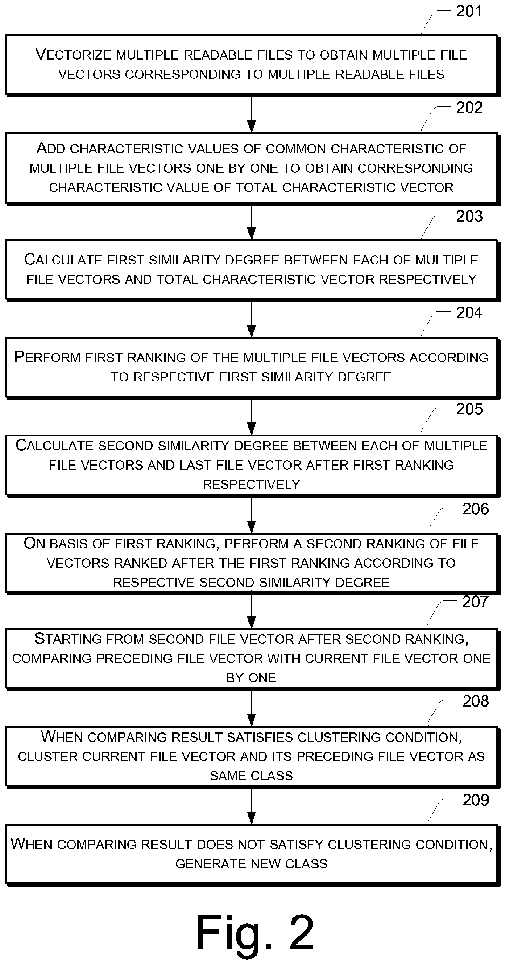

Figure 2 illustrates a flow chart of an embodiment 2 of a clustering method in accordance with the present disclosure. This embodiment can be understood as a specific example that applies the clustering method in the present disclosure to practice. The method is described below.

At 201, the method vectorizes multiple readable files to obtain multiple file vectors each of which corresponding to a respective one of the multiple readable files.

This embodiment is illustrated by reference to a specific example in practice. Assuming there are 10 readable files and each readable file has a total of 4 characteristics, then the outcome of vectorization may be as follows: a file vector 1 of a first readable file is (0.2, 0, 1, 1), a file vector 2 of a second readable file is (0.3, 0.2, 0, 1), a file vector 3 of a third readable file is (0.1, 0.1, 0.1, 0.2), a file vector 4 of a fourth readable file is (0, 0, 0.6, 0.7), a file vector 5 of a fifth readable file is (1, 2, 3, 4), a file vector 6 of a sixth readable file is (0.3, 0, 0.9, 0.9), a file vector 7 of a seventh readable file is (0.4, 0.1, 0, 0.9), a file vector 8 of a eighth readable file is (0.2, 0.1, 0.2, 0.1), a file vector 9 of a ninth readable file is (0, 0, 0.5, 0.6), and a file vector 10 of a tenth readable file is (0.3, 0, 0.9, 1).

At 202, the method adds, or sums, respective values of a common characteristic of the multiple file vectors one by one to obtain a corresponding characteristic value of a total characteristic vector.

With regards to each characteristic of the 10 file vectors of the 10 readable files, the 10 file vectors corresponding to the 10 readable files are summed. In other words, the sum of the characteristic values of the first characteristic of the 10 file vectors is regarded as the first characteristic value of the total characteristic vector, and so on and so forth. In this embodiment, the obtained total characteristic vector is (2.8, 2.5, 7.2, 10.4).

At 203, the method calculates a respective first similarity degree between each of the multiple file vectors and the total characteristic vector respectively.

In practical applications, an angular cosine formula can be used to calculate the first similarity degree. The angular cosine method is used to calculate the respective similarity degree between each vector and the total characteristic vector. For example, in calculating the similarity degrees, the following may be obtained: a first similarity degree between the file vector 1 of the first readable file and the total characteristic vector is 0.963638, a first similarity degree between the file vector 2 of the second readable file and the total characteristic vector is 0.837032, a first similarity degree between the file vector 3 of the third readable file and the total characteristic vector is 0.953912, a first similarity degree between the file vector 4 of the first readable file and the total characteristic vector is 0.95359, a first similarity degree between the file vector 5 of the fifth readable file and the total characteristic vector is 0.982451, a first similarity degree between the file vector 6 of the sixth readable file and the total characteristic vector is 0.966743, a first similarity degree between the file vector 7 of the seventh readable file and the total characteristic vector is 0.821485, a first similarity degree between the file vector 8 of the eighth readable file and the total characteristic vector is 0.788513, a first similarity degree between the file vector 9 of the ninth readable file and the total characteristic vector is 0.954868, a first similarity degree between the file vector 10 of the tenth readable file and the total characteristic vector is 0.974316.

At 204, the method performs a first ranking of the multiple file vectors according to the respective first similarity degree.

The 10 file vectors in this embodiment are ranked from high to low according to the first similarity degree values. The result of high-to-low ranking is as follows: file vector 5, file vector 10, file vector 6, file vector 1, file vector 9, file vector 3, file vector 4, file vector 2, file vector 7, and file vector 8. The corresponding file vectors are as follows: (1, 2, 3, 4), (0.3, 0, 0.9, 1), (0.3, 0, 0.9, 0.9), (0.2, 0, 1, 1), (0, 0, 0.5, 0.6), (0.1, 0.1, 0.2, 0.2), (0, 0, 0.6, 0.7), (0.3, 0.2, 0, 1), (0.4, 0.1, 0, 0.9), (0.2, 0.1, 0.1, 0.2). In other embodiments, the file vectors may be ranked from low to high according to the first similarity degree values.

Except for the file vectors (0, 0, 0.5, 0.6), (0.1, 0.1, 0.1, 0.2), and (0, 0, 0.6, 0.7) that do not connect successively, the other file vectors have realized similar successive connection. For example, the similarity degree between the vectors (0.3, 0, 0.9, 1) and (0.3, 0, 0.9, 0.9) is 0.998614. The similarity degree between the vectors (0.3, 0, 0.9, 0.9) and (0.2, 0, 1, 1) is 0.995863. However, the similarity degree between the vectors (0, 0, 0.5, 0.6) and (0, 0, 0.6, 0.7) is 0.999904 while these two vectors are not ranked next to each other. Therefore, there will be subsequent ranking procedures in this embodiment to obtain more accurate calculation result.

At 205, the method calculates a respective second similarity degree between each of the multiple file vectors and a last file vector after the first ranking respectively.

In practical applications, before calculation of the second similarity degrees, a precision processing can be carried out on the values of the first similarity degrees to achieve accuracy to the second decimal place. The obtained result may be as follows: a first similarity degree between the file vector 1 of the first readable file and the total characteristic vector is 0.96, a first similarity degree between the file vector 2 of the second readable file and the total characteristic vector is 0.83, a first similarity degree between the file vector 3 of the third readable file and the total characteristic vector is 0.95, a first similarity degree between the file vector 4 of the first readable file and the total characteristic vector is 0.95, a first similarity degree between the file vector 5 of the fifth readable file and the total characteristic vector is 0.98, a first similarity degree between the file vector 6 of the sixth readable file and the total characteristic vector is 0.96, a first similarity degree between the file vector 7 of the seventh readable file and the total characteristic vector is 0.82, a first similarity degree between the file vector 8 of the eighth readable file and the total characteristic vector is 0.78, a first similarity degree between the file vector 9 of the ninth readable file and the total characteristic vector is 0.95, a first similarity degree between the file vector 10 of the tenth readable file and the total characteristic vector is 0.97.

Therefore, the last position in the first ranking is the file vector 8. Each of the other file vectors is compared with the file vector 8 to calculate the respective second similarity degree. The first similarity degrees of the file vectors 9, 3, and 4 are the same, or 0.95. The three corresponding file vectors are (0, 0, 0.5, 0.6), (0.1, 0.1, 0.1, 0.2), and (0, 0, 0.6, 0.7) respectively. After calculation, the values of the second similarity degrees for the above three vectors are 0.647821, 0.8366, and 0.651695 respectively.

At 206, on a basis of the first ranking, the method performs a second ranking of the file vectors ranked after the first ranking according to the second similarity degrees.

On a precondition that the values of the first similarity degrees after precision processing are equal, this step ranks the corresponding file vectors according to the values of the second similarity degrees from high to low. For example, the first similarity degree values of file vectors 9, 3, and 4 are the same. After the second ranking, according to the values of the second similarity degrees from high to low, the obtained ranking order is file vector 3, file vector 9, and file vector 4, or (0.1, 0.1, 0.1, 0.2), (0, 0, 0.5, 0.6), and (0, 0, 0.6, 0.7). This achieves a result that the file vectors 9 and 4 are successively connected. A total ranking result according to the values of the second similarity degrees is thus: 5, 10, 6, 1, 3, 9, 4, 2, 7, and 8.

At 207, for each of the ranked file vectors starting from the second file vector after the second ranking, the method compares a preceding file vector with a current file vector to provide a respective comparison result.

In practical applications, according to a different threshold, the comparison result can be different. In practical applications, the threshold is between 0 and 1. The closer the threshold is to 1, the more accurate the clustering result is. For example, the threshold is set to 0.98 in this example.

At 208, when the comparison result satisfies a clustering condition, the method clusters a current file vector and its preceding file vector into a same class.

In the example, (03, 0, 0.9, 1), (0.3, 0, 0.9, 0.9), and (0.2, 0, 1, 1) are classified as one class.

At 209, when the comparison result does not satisfy the clustering condition, the method generates a new class.

When comparing the file vector (0, 0, 0.5, 0.6), as the comparison result does not satisfy the clustering condition, e.g., the comparison result is not higher than or equal to a preset threshold, a new class is generated. In other words, the file vector (0, 0, 05, 0.6) belongs to the new class. According to a threshold value 0.99 defined in this example, the clustering result includes 6 classes, which are:
Class 1: (1, 2, 3, 4)
Class 2: (0.3, 0, 0.9, 1), (0.3, 0, 0.9, 0.9), (0.2, 0, 1, 1)
Class 3: (0, 0, 0.5, 0.6), (0, 0, 0.6, 0.7)
Class 4: (0.1, 0.1, 0.2, 0.2)
Class 5: (0.3, 0.2, 0, 1), (0.4, 0.1, 0, 0.9)
Class 6: (0.2, 0.1, 0.2, 0.1)

In this embodiment, a method for constructing the total characteristic vector is used to implement successive connection of file vectors with similar values of similarity degrees. Such method ensures less comparison times between file vectors is needed, thus resulting in improvement of clustering performance with guarantee of the quality of the clustering result when clustering the readable files.

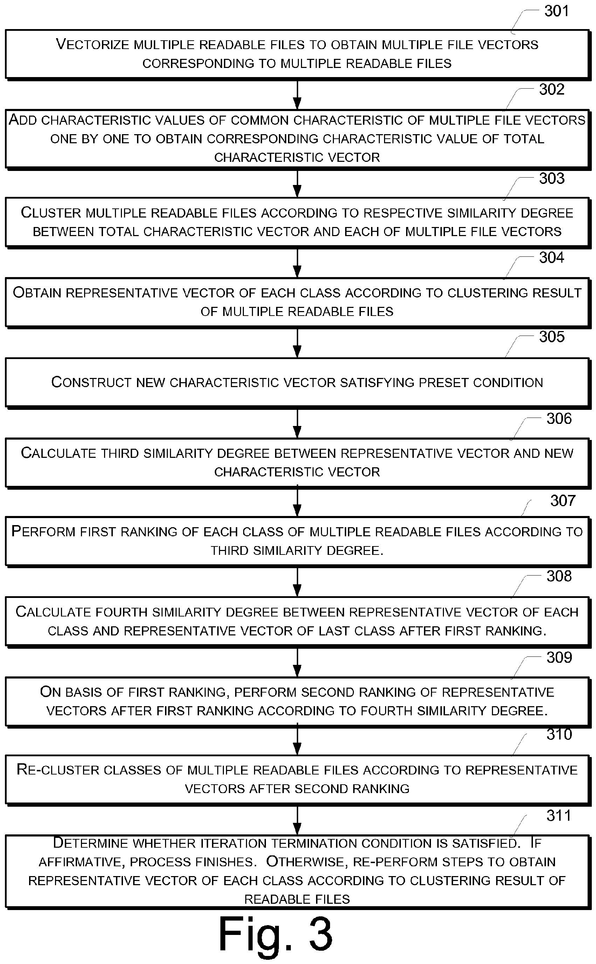

Figure 3 illustrates a flow chart of an embodiment 3 of a clustering method in accordance with the present disclosure. The method is described below.

At 301, the method vectorizes multiple readable files to obtain multiple file vectors each of which corresponding to a respective one of the multiple readable files.

At 302, the method adds, or sums, respective values of a common characteristic of the multiple file vectors one by one to obtain a characteristic value corresponding to a total characteristic vector.

At 303, the method clusters the multiple readable files according to a respective similarity degree between the total characteristic vector and each of the multiple file vectors.

The step 303 can be implemented by the following steps.

At A1, a respective first similarity degree between each of the multiple file vectors and the total characteristic vector is calculated respectively.

The method for calculating the first similarity degrees can calculate a vector angular cosine formula.

At A2, a first ranking of the multiple file vectors is performed according to the first similarity degrees.

At A3, a respective second similarity degree between the multiple file vectors and a last file vector in the first ranking is calculated respectively.

At A4, a second ranking of the ranked file vectors after the first ranking is performed based on the first ranking.

At A5, the multiple readable files are clustered according to the file vectors after the second ranking.

The step A5 can be implemented by the following sub-steps.

At a1, a current file vector is compared with a file vector preceding the current file vector, one by one for each of the file vectors starting from a second file vector of the ranked file vectors after the second ranking, to provide a respective comparison result.

At a2, when the comparison result satisfies a clustering condition, the current file vector and the preceding file vector are classified into a class.

At a3, when the comparison result does not satisfy the clustering condition, a new class is generated.

At 304, the method obtains a representative vector of each class according to the clustering result of the multiple readable files.

In practical applications, the result obtained in the embodiment 2 sometimes may not be suitable for a scenario requiring higher precision. Then after the clustering result is obtained in accordance with the method as described in the embodiment 2, a representative file vector for each class is obtained. The representative file vector can be a center vector of all file vectors in each class. The number of the file vectors is the same as the number of classes obtained in the step 304.

At 305, the method constructs a new characteristic vector satisfying a preset condition.

The new characteristic vector is different from the total characteristic vector. The construction method for the new characteristic vector can be different depending on various application scenarios. The new characteristic vector, however, needs to meet the following standards: obtaining a similarity degree value between each of the representative vectors and the new characteristic vector such that, in the file vectors ranked from high to low according to the values of the similarity degrees, similar or close file vectors are successively connected to each other.

At 306, the method calculates a respective third similarity degree between the representative vector of each class and the new characteristic vector.

In this embodiment, this step calculates a respective third similarity degree value between the representative vector in each class and the new characteristic vector.

At 307, the method performs a first ranking of each class of the multiple readable files according to the third similarity degrees.

In this embodiment, each class clustered in the step 304 is ranked according to the third similarity degrees.

At 308, the method calculates a respective fourth similarity degree between the representative vector of each class and a representative vector of a last class after the first ranking.

Similar to the embodiment 2, after this embodiment, the respective fourth similarity degree between the representative vector of each class and a representative vector of a last class after the ranking is calculated.

At 309, on a basis of the first ranking, the method performs a second ranking of the representative vectors after the first ranking according to the fourth similarity degrees.

Such ranking operation can be repeated. For example, with respect to representative vectors with a same third similarity degree, the representative vectors should have been successively connected with each other after the first ranking but is not successively connected. Then according to the fourth similarity degrees, such representative vectors with same third similarity degree will have the second ranking.

At 310, the method re-clusters the classes of the multiple readable files according to the representative vectors after the second ranking.

Optionally, at 311, the method further determines whether an iteration termination condition is satisfied. If affirmative, the process finishes. Otherwise, the process re-performs steps to obtain the representative vector of each class according to the clustering result of the readable files.

The iteration termination condition can generally be set up as achieving a certain number of iterations or a certain number of classes arising from the clustering result.

It is appreciated that, when clustering according to the method embodiment, the characteristic vectors constructed in each embodiment in different implementation process can be different, only if the standard for constructing characteristic vectors is satisfied, and different characteristic vectors can be constructed in different scenarios according to different requirements. In this embodiment, the number of selected characteristic vectors in the second iteration clustering can be different depending on various requirements, although the standard for constructing characteristic vectors is still satisfied. In the embodiments 2 and 3, there are different constructing standards for the total characteristic vector and new characteristic vector. This embodiment uses iteration method to improve clustering quality.

For convenience of description, the aforementioned embodiments are described as a combination of action. One of ordinary skill in the art, however, would appreciate that the present disclosure is not limited by an order of such described actions as, according to the present disclosure, some steps can be performed in other orders or concurrently. In addition, one of ordinary skill in the art would also appreciate that the embodiments disclosed in the present disclosure are preferred embodiments, and some of the described actions and modules may not be necessary for the present disclosure.

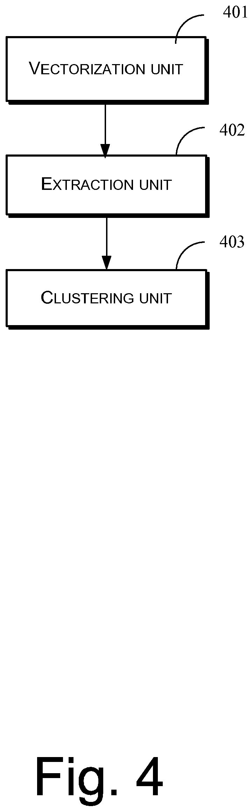

Corresponding to the embodiment 1 of the clustering method as described above, by reference to Figure 4, the present disclosure also provides an embodiment 1 of a clustering system. In this embodiment, the system may include: a vectorization unit 401, an extraction unit 402, and a clustering unit 403.

The vectorization unit 401 is configured to vectorize multiple readable files to obtain multiple file vectors each of which corresponding to a respective one of the multiple readable files.

In this example, a readable file can be a file of any format convertible into a vector, such as a Word document, an Excel spreadsheet, and so on. The vectorization unit 401 vectorizes the multiple readable files to be clustered by converting the multiple readable files into the corresponding multiple file vectors. Vectorization refers to converting a readable file into a vector composed of a series of numbers, each number representing a value corresponding to a respective characteristic. Different readable files may have different corresponding vectors. A file vector in the present disclosure refers to a vector. The reason why a file vector is called file vector is to distinguish it from a characteristic vector.

The extraction unit 402 is configured to obtain a total characteristic vector based on the multiple file vectors.

From the multiple file vectors of the multiple files, the extraction unit 402 obtains the total characteristic vector based on the multiple file vectors. In practical applications, when the extraction unit 402 obtains the total characteristic vector, it extracts all characteristics of the readable files, and generates a vector including all characteristics of the readable files as the total characteristic vector. In one embodiment, the total characteristic vector can be generated by summing the characteristic values of all the readable files and using the sum as the characteristic value of the total characteristic vector. A characteristic of readable file can be a minimum acceptable unit in the readable file, such as a word or a number for example. A detailed characteristic may be different depending on a characteristic selection algorithm. The total characteristic vector obtained by the extraction unit 402 can guarantee that a similarity degree value cannot be 0 when comparing the file vector and the total characteristic vector, thereby allowing similar file vectors to be ranked in order.

The clustering unit 403 is configured to cluster the multiple files based on a ranking result of a respective similarity degree between the total characteristic vector and each of the multiple file vectors.

The clustering unit 403 calculates the respective similarity degree between the total characteristic vector and each of the multiple file vectors, and clusters the multiple readable files according to the similarity degrees. In this embodiment, a successive comparison method can be used, e.g., every file vector is compared for similarity with its preceding vector. When presetting a threshold, the clustering unit 403 can set up the threshold as 0.99, e.g., when the similarity degree between two files is equal to or higher than 0.99, the two files are clustered as a same class, otherwise a new class is generated. Finally, all the file vectors corresponding to all the readable files are clustered. The comparison of vector similarity degree can be based on different vector similarity calculation formulas in mathematics. Different formulas can derive different calculation methods for the similarity degree.

In this embodiment, before clustering, extraction unit 402 can combine all the file vectors of all the readable files to generate the total characteristic vector. Such total characteristic vector is a vector that can include all characteristics of all vectors. Therefore, after calculation of the respective similarity degree between each file vector and the total characteristic vector, the multiple readable files are ranked according to their similarity degrees. Then according to a principle of successive comparison, the clustering is performed according to the similarity degree between every two adjacent file vectors. Thus each file vector is only compared with its adjacent file vector, thereby reducing the number of times of comparison of the similarity degrees between file vectors. This advantageously results in reduced usage of CPU and memory, reduced run time, and improved computing performance.

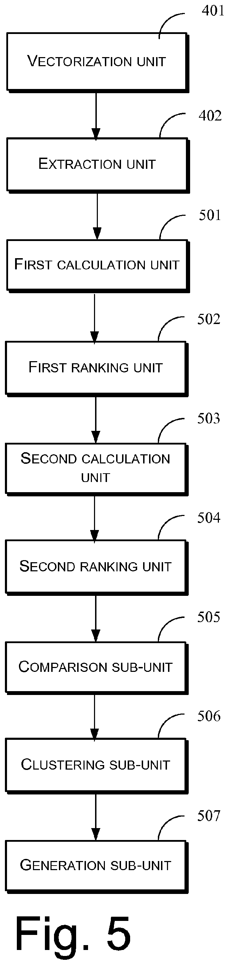

Corresponding to the embodiment 2 of the clustering method as described above by the present disclosure, by reference to Figure 5, the present disclosure also provides a preferred embodiment 2 of a clustering system. In this embodiment, the system may include: a vectorization unit 401, an extraction unit 402, a first calculation unit 501, a first ranking unit 502, a second calculation unit 503, a second ranking unit 504, a comparison sub-unit 505, a clustering sub-unit 506, and a generation sub-unit 507.

The vectorization unit 401 is configured to vectorize multiple readable files to obtain multiple file vectors each of which corresponding to a respective one of the multiple readable files.

The extraction unit 402 is configured to sum up respective values of a common characteristic of the multiple file vectors to obtain a characteristic value corresponding to a total characteristic vector.

The first calculation unit 501 is configured to calculate a respective first similarity degree between each of the multiple file vectors and the total characteristic vector.

The first ranking unit 502 is configured to perform a first ranking of the multiple file vectors according to the first similarity degrees.

The second calculation unit 503 is configured to calculate a respective second similarity degree between each of the multiple file vectors and a last file vector in the first ranking.

The second ranking unit 504 is configured to perform a second ranking of the ranked file vectors after the first ranking on a basis of the first ranking.

In this embodiment, a second clustering unit can be configured to cluster the multiple readable files according to the file vectors ranked after the second ranking. The second clustering unit can include the comparison sub-unit 505, the clustering sub-unit 506, and the generation sub-unit 507.

The comparison sub-unit 505 is configured to compare, for each of the ranked file vectors starting from the second file vector after the second ranking, each file vector with its preceding file vector one by one to provide a respective comparison result.

The clustering sub-unit 506 is configured to, when the comparison result satisfies a clustering condition, cluster the current file vector and its preceding file vector as a class.

The generation sub-unit 507 is configured to, when the comparison result does not satisfy the clustering condition, generate a new class.

In this embodiment, a configuration for constructing the total characteristic vector is used to implement successive connection of file vectors with the values of the similar similarity degrees. Such configuration requires less comparison time between file vectors and thus results in improvement of clustering performance with guarantee of the quality of the clustering result when clustering the readable files.

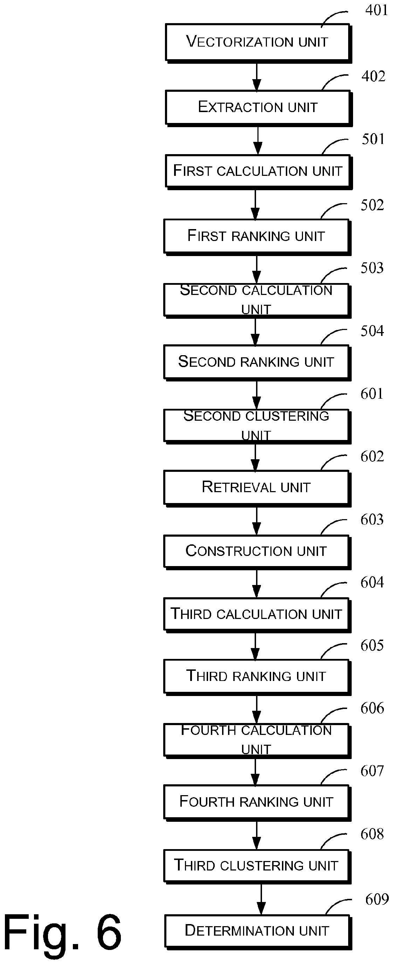

Corresponding to the embodiment 3 of the clustering method as described above by the present disclosure, by reference to Figure 6, the present disclosure also provides a preferred embodiment 3 of a clustering system. In this embodiment, the system may include: a vectorization unit 401, an extraction unit 402, a first calculation unit 501, a first ranking unit 502, a second calculation unit 503, a second ranking unit 504, a second clustering unit 601, a retrieval unit 602, a construction unit 603, a third calculation unit 604, a third ranking unit 605, a fourth calculation unit 606, a fourth ranking unit 607, a third clustering unit 608, and a determination unit 609.

The vectorization unit 401 is configured to vectorize multiple readable files to obtain multiple file vectors each of which corresponding to a respective one of the multiple readable files.

The extraction unit 402 is configured to sum up respective values of a common characteristic of the multiple file vectors to obtain a characteristic value corresponding to a total characteristic vector.

The first calculation unit 501 is configured to calculate a respective first similarity degree between each of the multiple file vectors and the total characteristic vector.

The first ranking unit 502 is configured to perform a first ranking of the multiple file vectors according to the first similarity degrees.

The second calculation unit 503 is configured to calculate a respective second similarity degree between each of the multiple file vectors and a last file vector in the first ranking.

The second ranking unit 504 is configured to perform a second ranking of the ranked file vectors after the first ranking on a basis of the first ranking.

The retrieval unit 602 is configured to retrieve a representative vector of each cluster according to the clustering result of the multiple readable files.

The construction unit 603 is configured to construct a new characteristic vector satisfying a preset condition.

The third calculation unit 604 is configured to calculate a respective third similarity degree between each representative vector and the new characteristic vector respectively.

The third ranking unit 605 is configured to perform a first ranking of each class of the multiple readable files according to the third similarity degrees.

The fourth calculation unit 606 is configured to calculate a respective fourth similarity degree between the representative vector of each class and a representative vector of a last class after the first ranking respectively.

The fourth ranking unit 607 is configured to perform a second ranking of the ranked representative vectors after the first ranking on a basis of the first ranking.

The third clustering unit 608 is configured to re-cluster the classes of the multiple readable files according to the representative vectors after the second ranking.

The determination unit 609 is configured to determine whether an iteration termination condition is satisfied. If affirmative, the process is finished. Otherwise, the process is not finished and continues to the steps to obtain the representative vector of each class according to the clustering result of the readable files.

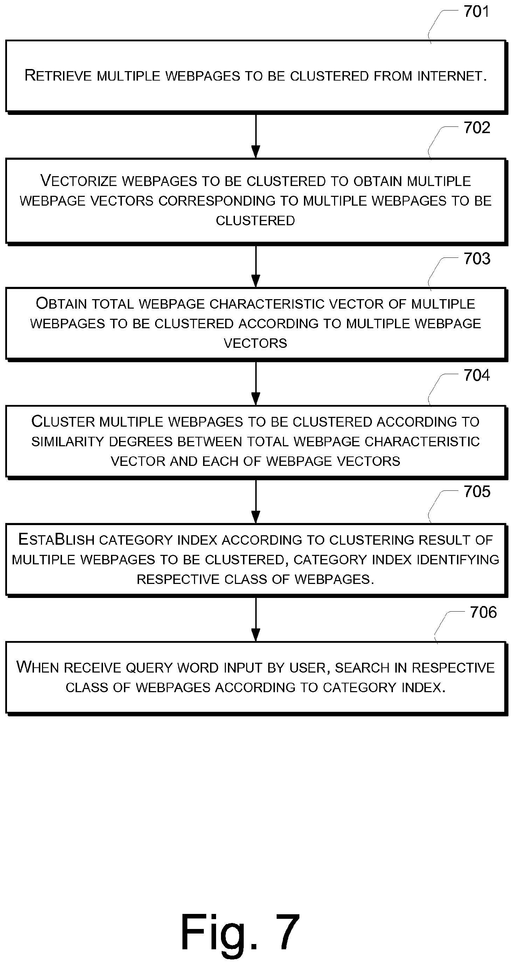

By reference to Figure 7, the present disclosure also provides an embodiment of a method to cluster webpages. The method is described below.

At 701, the method retrieves from the Internet or a network multiple webpages to be clustered.

The clustering method described above is also applicable to the internet field, such as category edition of a portal website, or clustering of the retrieved webpages by network spiders of a search engine server. As an example of the network spider of an internet search engine system, the network spider can firstly retrieve a certain number of webpages from the internet. Such webpages may be different in number and content dependent upon actual scenarios. Such webpages are the webpages to be clustered.

At 702, the method vectorizes the webpages to be clustered to obtain multiple webpage vectors each of which corresponding to a respective one of the multiple webpages to be clustered.

The webpages to be clustered are equivalent to the readable files mentioned above. The webpages are converted into vector mode by text analysis. Preferably, the TF-IDF method can be used for conversion.

At 703, the method obtains a total webpage characteristic vector of the multiple webpages to be clustered according to the multiple webpage vectors.

At 704, the method clusters the multiple webpages to be clustered according to the respective similarity degree between the total webpage characteristic vector and each of the webpage vectors.

Steps 703 and 704 are the implementation process to cluster the readable files in the embodiment described above. In this embodiment, the target objects are the webpages to be clustered. In this example, a precision extent of the clustering is dependent upon the selection of the threshold. A proper and corresponding threshold value can be set up or calculated in different application scenarios.

At 705, the method establishes a category index according to the clustering result of the multiple webpages to be clustered. The category index is used to identify a respective class of webpages.

After clustering of the multiple webpages at 704, there is a center vector in the webpage vectors corresponding to each class of webpages to be clustered. A webpage corresponding to the center vector is a center webpage in such class of webpages. Characteristics of the center webpage can be obtained by analyzing the center webpage. Further, the specific category to which such class of webpages belongs can be defined by the characteristics. A category index can be established according to different categories. The category index can uniquely identify each class of webpages.

At 706, when receiving a query word input by a user, the method searches in the respective class of webpages according to the category index.

The search engine, when receiving a query word input by the user, can match the query to a relevant category according to a category to which the query word belongs and the category index, and then only conducts searches under the relevant category. Thus, there is less calculation required of the search engine at the search engine server side. This method increases searching speed and optimizes performance of the search engine server. Further, this method can also improve user experience of the search engine.

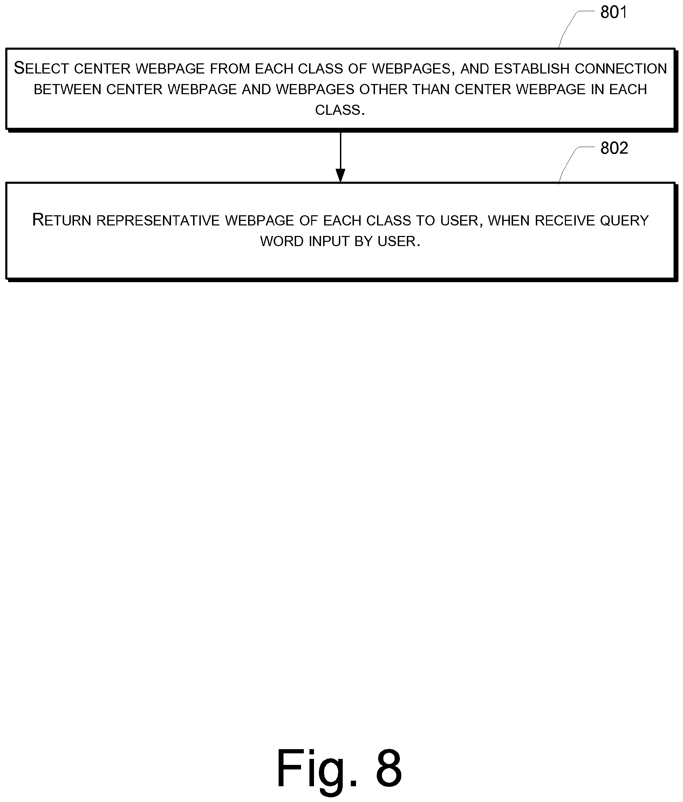

In another example of the present disclosure, by reference to Figure 8, after step 704, a method according to the present disclosure further provides following steps.

At 801, the method selects a center webpage from each class of webpages, and establishes a connection between the center webpage and webpages other than the center webpage in each class.

In this example, the center webpage is selected from each class of clustered webpages according to the clustering result. Given that webpage vectors of each class of webpages to be clustered have the center vector, the webpage corresponding to the center vector is the center webpage of such class of webpages. Thus, after selection of the center webpage, in each class of webpages, each of the webpages other than the center webpage can establish a connection with the center webpage. Such connection can be understood as, when there is a click of the center webpage and opening of the center webpage, a default relationship of other webpages information in the class of the center webpage can be shown. It can be set up that the connection method and display of other webpages information in the class according to the user requirement and application scenarios. The present disclosure does not impose any restriction in this aspect. When displaying webpages, similar webpages are not removed but are merged and linked to a representative webpage of the class, which may or may not be the center webpage. When there is a need to review information of a specific webpage, a link interface can be used to enter the interface of similar webpages for the user to browse.

At 802, the method returns the representative webpage of each class to the user, in response to receiving the query word input by the user. At the search engine server, when the query word input by the user is received, the search engine only returns the corresponding center webpage to the user according to the category to which the query word belongs. Further, each center webpage can have links to the other webpages of the same class. In this example, the selection of the threshold for clustering in step 704 can be decided by actual applications. Different threshold values may be used for different applications. For example, a high threshold value may be used for clustering webpages and determining similarity. As there are many format variations for webpages, some important attributes are often selected to determine whether the webpags are similar. However, the important attributes sometimes may not represent all characteristics of the webpages, and a threshold value close to or higher than 0.9 should be considered.

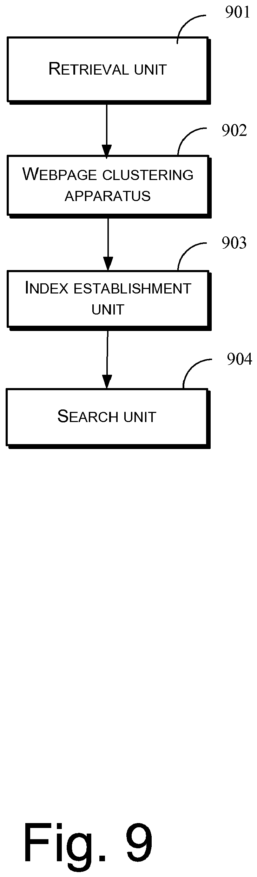

Figure 9 illustrates a diagram of an example of a system for clustering webpages in accordance with the present disclosure. The system may include: a retrieval unit 901, a webpage clustering apparatus 902, an index establishment unit 903, and a search unit 904.

The retrieval unit 901 is configured to retrieve from the Internet or a network multiple webpages to be clustered.

The webpage clustering apparatus 902 is configured to vectorize the webpages to be clustered to obtain multiple webpage vectors each of which corresponding to a respective one of the multiple webpages to be clustered, to obtain a total webpage characteristic vector according to the multiple webpage vectors, and to cluster the multiple webpages to be clustered according to similarity degrees between the total webpage characteristic vector and each of the webpage vectors.

The index establishment unit 903 is configured to establish a category index according to the clustering result of the multiple webpages to be clustered. The category index identifies one or more classes of webpages.

The searching unit 904 is configured to, when receiving a query word input by a user, search a respective class of webpages according to the category index.

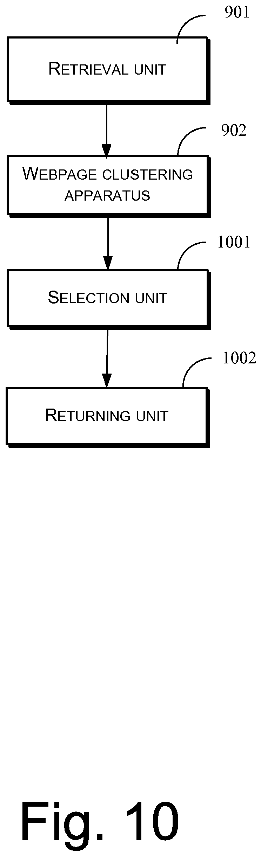

By reference to Figure 10, the present disclosure further provides an example of a system for clustering webpages in accordance with the present disclosure. The system may include: a retrieval unit 901, a webpage clustering apparatus 902, a selection unit 1001, and a returning unit 1002.

The retrieval unit 901 is configured to retrieve from the Internet or a network multiple webpages to be clustered.

The webpage clustering apparatus 902 is configured to vectorize the webpages to be clustered to obtain multiple webpage vectors each of which corresponding to a respective one of the multiple webpages to be clustered, to obtain a total webpage characteristic vector according to the multiple webpage vectors, and to cluster the multiple webpages to be clustered according to similarity degrees between the total webpage characteristic vector and each of the webpage vectors.

The selection unit 1001 is configured to select a representative webpage from each class of webpages, and to establish a connection between the representative webpage and the other webpages other than the center webpage in each class.

The returning unit 1002 is configured to return the representative webpage of each class to the user, in response to receiving the query word input by the user.

The various examples are progressively described in the present disclosure. Same or similar portions of the examples can be mutually referenced. Each examples has a different focus than other examples. In particular, the system examples are described in a relatively simple manner because of its fundamental correspondence with the method examples. Details thereof can be referred to related portions of the method examples.

Finally, it is noted that any relational terms such as "first" and "second" in the present disclosure are only meant to distinguish one entity from another entity or one operation from another operation, but not necessarily request or imply existence of any real-world relationship or ordering between these entities or operations. Moreover, it is intended that terms such as "include", "have" or any other variants mean non-exclusively "comprising". Therefore, processes, methods, articles or devices which individually include a collection of features may include not only those features, but may also include other features that are not listed, or any inherent features of these processes, methods, articles or devices. Without any further limitation, a feature defined within the phrase "include a ..." does not exclude the possibility that process, method, article or device that recites the feature may have other equivalent features.

The clustering methods and systems provided by in the present disclosure have been described in details above. The above examples are employed to illustrate the concept and implementation of the present disclosure. The examples are provided to facilitate understanding of the methods and respective core concepts of the present disclosure. Based on the concepts of this disclosure, one of ordinary skill in the art may make modifications to the practical implementation and application scopes. In conclusion, the content of the present disclosure shall not be interpreted as limitations of this disclosure.

## Claims

1. A method for clustering, the method comprising:
vectorizing (101) a plurality of readable files to obtain a plurality of file vectors each corresponding to a respective one of the readable files and having a series of numbers, each number representing a value corresponding to a characteristic of the respective one of the readable files;
obtaining (102) a total characteristic vector based on the file vectors, wherein obtaining the total characteristic vector based on the file vectors comprises, for each characteristic of the readable files, summing the respective values of the file vectors to obtain a corresponding characteristic value of the total characteristic vector; and
clustering (103) the readable files based on a ranking result of a respective similarity degree between the total characteristic vector and each of the file vectors;
**characterized in that** the method further comprises:
obtaining (304) a representative vector for each class of a plurality of classes of the readable files according to the clustering of the readable files;
constructing (305) a new characteristic vector satisfying a preset condition;
calculating (203) a respective first similarity degree between the representative vector of each class and the new characteristic vector;
performing (204) a first ranking of each class of the readable files according to the first similarity degrees;
calculating (205) a respective second similarity degree between the representative vector of each class and a representative vector of a last class after the first ranking;
performing (206) a second ranking of the representative vectors after the first ranking according to the second similarity degrees; and
re-clustering (310) the classes of the readable files according to the representative vectors after the second ranking.

2. The method as recited in claim 1, wherein clustering the readable files based on the ranking result of the respective similarity degree between the total characteristic vector and each of the file vectors further comprises:
calculating a respective third similarity degree between each of the file vectors and the total characteristic vector;
performing a first ranking of the file vectors according to the third similarity degrees;
calculating a respective fourth similarity degree between each of the file vectors and a last file vector after the first ranking;
performing a second ranking of the file vectors ranked after the first ranking according to the fourth similarity degrees; and
clustering the readable files according to the file vectors ranked after the second ranking.

3. The method as recited in claim 2, wherein clustering the readable files according to the file vectors ranked after the second ranking comprises:
for each of the ranked file vectors starting from a second file vector after the second ranking, comparing a current file vector with its preceding file vector to provide a respective comparison result;
when the comparison result satisfies a clustering condition, clustering the current file vector and its preceding file vector as a same class; and
when the comparison result does not satisfy the clustering condition, generating a new class.

4. The method as recited in claim 2, wherein at least one respective third similarity degree or fourth similarity degree is calculated using a vector angular cosine formula.

5. The method as recited in claim 1, wherein re-clustering the classes of the readable files according to the representative vectors after the second ranking comprises:
determining whether an iteration termination condition is satisfied;
if the iteration termination condition is satisfied, terminating the clustering method; and
if the iteration termination condition is not satisfied, iterating prior steps to obtain the representative vector of each class according to the clustering of the readable files.

6. The method as recited in one of claims 1 to 5, wherein the plurality of readable files represent a plurality of webpages.

7. A system for clustering, the system comprising:
a vectorization unit (401) that vectorizes a plurality of readable files to obtain a plurality of file vectors each of which corresponding to a respective one of the readable files and having a series of numbers, each number representing a value corresponding to a characteristic of the respective one of the readable files;
an extraction unit (402) that obtains a total characteristic vector based on the file vectors,
wherein the extraction unit is configured to sum, for each characteristic of the readable files, the respective values of the file vectors to obtain a characteristic value of the total characteristic vector; and
a clustering unit (403) that clusters the readable files into a plurality of classes of the readable files based on a ranking result of a respective similarity degree between the total characteristic vector and each of the file vectors;
**characterized in that** the system further comprises:
a retrieval unit (602) that retrieves a representative vector of each class of the plurality of classes of the readable files;
a construction unit (603) that provides a new characteristic vector satisfying a preset condition;
a first calculation unit (501) that calculates a respective first similarity degree between the representative vector of each class and the new characteristic vector;
a first ranking unit (502) that performs a first ranking of each class of the readable files according to the first similarity degrees;
a second calculation unit (503) that calculates a respective second similarity degree between the representative vector of each class and a representative vector of a last class after the first ranking;
a second ranking unit (504) that performs a second ranking of the ranked representative vectors after the first ranking; and
a second clustering unit (601) that re-clusters the classes of the readable files according to the representative vectors after the second ranking.

8. The system as recited in claim 7, wherein the clustering unit comprises:
a third calculation unit that calculates a respective third similarity degree between each of the file vectors and the total characteristic vector;
a third ranking unit that performs a first ranking of the file vectors according to the third similarity degrees;
a fourth calculation unit that calculates a respective fourth similarity degree between each of the file vectors and a last file vector after the first ranking;
a fourth ranking unit that performs a second ranking of the ranked file vectors after the first ranking; and
a third clustering unit that clusters the readable files according to the file vectors ranked after the second ranking.

9. The system as recited in claim 8, wherein the third clustering unit comprises:
a comparison sub-unit that compares, for each of the ranked file vectors starting from a second file vector after the second ranking, a current file vector with its preceding file vector to provide a respective comparison result;
a clustering sub-unit that, when the comparison result satisfies a clustering condition, clusters the current file vector and its preceding file vector as a class; and
a generation sub-unit that, when the comparison result does not satisfy the clustering condition, generates a new class.

10. The system as recited in claim 9, further comprising:
a determination unit that determines whether an iteration termination condition is satisfied, finishes a clustering process if the iteration termination condition is satisfied, causes iteration of the clustering process to obtain a respective representative vector for each class if the iteration termination condition is not satisfied.

11. The system as recited in one of claims 7 to 10, wherein the plurality of readable files represent a plurality of webpages.

## Patentansprüche

1. Verfahren zur Clusterbildung, wobei das Verfahren umfasst:
Vektorisieren (101) mehrerer lesbarer Dateien, sodass mehrere Dateivektoren erhalten werden, die jeweils einer entsprechenden der lesbaren Dateien zugeordnet sind und eine Serie von Nummern aufweisen, wobei jede Nummer einen Wert repräsentiert, der einer Eigenschaft der entsprechenden einen der lesbaren Dateien entspricht;
Erhalten (102) eines Gesamteigenschaftsvektors auf der Grundlage der Dateivektoren, wobei das Erhalten des Gesamteigenschaftsvektors auf der Grundlage der Dateivektoren, für jede der lesbaren Dateien umfasst: Summieren der jeweiligen Werte der Dateivektoren, um einen entsprechenden charakteristischen Wert des Gesamteigenschaftsvektors zu erhalten; und
Bilden von Clustern (103) aus den lesbaren Dateien auf der Grundlage eines Einstufungsergebnisses eines jeweiligen Ähnlichkeitsgrades zwischen dem Gesamteigenschaftsvektor und jedem der Dateivektoren;
**dadurch gekennzeichnet, dass** das Verfahren ferner umfasst:
Erhalten (304) eines repräsentativen Vektors für jede Klasse aus mehreren Klassen der lesbaren Dateien entsprechend der Clusterbildung der lesbaren Dateien;
Erstellen (305) eines neuen Eigenschaftsvektors, der eine vorgegebene Bedingung erfüllt;
Berechnen (203) eines entsprechenden ersten Ähnlichkeitsgrades zwischen dem repräsentativen Vektor jeder Klasse und dem neuen Eigenschaftsvektor;
Ausführen (204) einer ersten Einstufung jeder Klasse der lesbaren Dateien entsprechend den ersten Ähnlichkeitsgraden;
Berechnen (205) eines entsprechenden zweiten Ähnlichkeitsgrades zwischen dem repräsentativen Vektor jeder Klasse und einem repräsentativen Vektor einer letzten Klasse nach der ersten Einstufung;
Ausführen (206) einer zweiten Einstufung der repräsentativen Vektoren nach der ersten Einstufung gemäß den zweiten Ähnlichkeitsgraden; und
erneute Clusterbildung (301) aus den Klassen der lesbaren Dateien entsprechend den repräsentativen Vektoren nach der zweiten Einstufung.

2. Verfahren nach Anspruch 1, wobei die Clusterbildung für die lesbaren Dateien auf der Grundlage des Einstufungsergebnisses des entsprechenden Ähnlichkeitsgrades zwischen dem Gesamteigenschaftsvektor und jedem der Dateivektoren ferner umfasst:
Berechnen eines entsprechenden dritten Ähnlichkeitsgrades zwischen jedem der Dateivektoren und dem Gesamteigenschaftsvektor;
Ausführen einer ersten Einstufung der Dateivektoren gemäß den dritten Ähnlichkeitsgraden;
Berechnen eines entsprechenden vierten Ähnlichkeitsgrades zwischen jedem der Dateivektoren und einem letzten Dateivektor nach der ersten Einstufung;
Ausführen einer zweiten Einstufung der Dateivektoren, die nach der ersten Einstufung eingestuft sind, gemäß den vierten Ähnlichkeitsgraden; und
Ausführen einer Clusterbildung der lesbaren Dateien gemäß den Dateivektoren, die nach der zweiten Einstufung eingestuft sind.

3. Verfahren nach Anspruch 2, wobei die Ausführung einer Clusterbildung der lesbaren Dateien gemäß den Dateivektoren, die nach der zweiten Einstufung eingestuft sind, umfasst:
für jeden der eingestuften Dateivektoren beginnend von einem zweiten Dateivektor nach der zweiten Einstufung, Vergleichen eines aktuellen Dateivektors mit seinem vorhergehenden Dateivektor, um ein entsprechendes Vergleichsergebnis bereitzustellen;
wenn das Vergleichsergebnis eine Clusterbildungsbedingung erfüllt, Bilden eines Clusters aus dem aktuellen Dateivektor und seinem vorhergehenden Dateivektor als eine gleiche Klasse; und
wenn das Vergleichsergebnis die Clusterbildungsbedingung nicht erfüllt, Erzeugen einer neuen Klasse.

4. Verfahren nach Anspruch 2, wobei mindestens ein entsprechender dritter Ähnlichkeitsgrad oder ein vierter Ähnlichkeitsgrad unter Anwendung einer Vektor-Winkelkosinus-Formel berechnet wird.

5. Verfahren nach Anspruch 1, wobei die Ausführung einer erneuten Clusterbildung der Klassen der lesbaren Dateien gemäß den repräsentativen Vektoren nach der zweiten Einstufung umfasst:
Ermitteln, ob eine Iterationsabschlussbedingung erfüllt ist;
wenn die Iterationsabschlussbedingung erfüllt ist, Beenden des Clusterbildungsverfahrens; und
wenn die Iterationsabschlussbedingung nicht erfüllt ist, Wiederholen vorhergehender Schritte, um den repräsentativen Vektor jeder Klasse gemäß der Clusterbildung der lesbaren Dateien zu erhalten.

6. Verfahren nach einem der Ansprüche 1 bis 5, wobei die mehreren lesbaren Dateien mehrere Webseiten repräsentieren.

7. System zur Clusterbildung, wobei das System umfasst:
eine Vektorisierungseinheit (401), die mehrere lesbare Dateien vektorisiert, um mehrere Dateivektoren zu erhalten, wovon jeder einer entsprechenden der lesbaren Dateien entspricht und eine Reihe von Nummern hat, wobei jede Nummer einen Wert repräsentiert, der einer Eigenschaft der entsprechenden einen der lesbaren Dateien entspricht;
eine Extrahiereinheit (402), die einen Gesamteigenschaftsvektor auf der Grundlage der Dateivektoren erhält, wobei die Extrahiereinheit ausgebildet ist, für jede Eigenschaft der lesbaren Dateien die jeweiligen Werte der Dateivektoren zu summieren, um einen charakteristischen Wert des Gesamteigenschaftsvektors zu erhalten; und
eine Clusterbildungseinheit (403), die die lesbaren Dateien in mehrere Klassen der lesbaren Dateien auf der Grundlage eines Einstufungsergebnisses eines entsprechenden Ähnlichkeitsgrades zwischen dem Gesamteigenschaftsvektor und jedem der Dateivektoren einteilt;
**dadurch gekennzeichnet, dass** das System ferner umfasst:
eine Abrufeeinheit (602), die einen repräsentativen Vektor jeder Klasse der mehreren Klassen der lesbaren Dateien abruft;
eine Erstellungseinheit (603), die einen neuen charakteristischen Vektor, der eine vorgegebene Bedingung erfüllt, bereitstellt;
eine erste Berechnungseinheit (501), die einen entsprechenden ersten Ähnlichkeitsgrad zwischen dem repräsentativen Vektor jeder Klasse und dem neuen Eigenschaftsvektor berechnet;
eine erste Einstufungseinheit (502), die eine erste Einstufung jeder Klasse der lesbaren Dateien entsprechend den ersten Ähnlichkeitsgraden ausführt;
eine zweite Berechnungseinheit (503), die einen entsprechenden zweiten Ähnlichkeitsgrad zwischen dem repräsentativen Vektor jeder Klasse und einem repräsentativen Vektor einer letzten Klasse nach der ersten Einstufung berechnet;
eine zweite Einstufungseinheit (504), die eine zweite Einstufung der eingestuften repräsentativen Vektoren nach der ersten Einstufung ausführt; und
eine zweite Clusterbildungseinheit (601), die die Klassen der lesbaren Dateien gemäß den repräsentativen Vektoren nach der zweiten Einstufung erneut in Cluster einteilt.

8. System nach Anspruch 7, wobei die Clusterbildungseinheit umfasst:
eine dritte Berechnungseinheit, die einen entsprechenden dritten Ähnlichkeitsgrad zwischen jedem der Dateivektoren und dem Gesamteigenschaftsvektor berechnet;
eine dritte Einstufungseinheit, die eine erste Einstufung der Dateivektoren gemäß den dritten Ähnlichkeitsgraden ausführt;
eine vierte Berechnungseinheit, die einen entsprechenden vierten Ähnlichkeitsgrad zwischen jedem der Dateivektoren und einem letzten Dateivektor nach der ersten Einstufung berechnet;
eine vierte Einstufungseinheit, die eine zweite Einstufung der eingestuften Dateivektoren nach der ersten Einstufung ausführt; und
eine dritte Clusterbildungseinheit, die die lesbaren Dateien gemäß den Dateivektoren, die nach der zweiten Einstufung eingestuft sind, in Cluster einteilt.

9. System nach Anspruch 8, wobei die dritte Clusterbildungseinheit umfasst:
eine Vergleichsuntereinheit, die für jeden der eingestuften Dateivektoren beginnend von einem zweiten Dateivektor nach der zweiten Einstufung einen aktuellen Dateivektor mit seinem vorhergehenden Dateivektor vergleicht, um ein entsprechendes Vergleichsergebnis bereitzustellen;
eine Clusterbildungsuntereinheit, die, wenn das Vergleichsergebnis eine Clusterbildungsbedingung erfüllt, den aktuellen Dateivektor und seinen vorhergehenden Dateivektor als eine Klasse einteilt; und
eine Erzeugungsuntereinheit, die, wenn das Vergleichsergebnis die Clusterbildungsbedingung nicht erfüllt, eine neue Klasse erzeugt.

10. System nach Anspruch 9, das ferner umfasst:
eine Ermittlungseinheit, die ermittelt, ob eine Iterationsabschlussbedingung erfüllt ist, einen Clusterbildungsprozess beendet, wenn die Iterationsabschlussbedingung erfüllt ist, eine Iteration des Clusterbildungsprozesses bewirkt, sodass ein entsprechender repräsentativer Vektor für jede Klasse erhalten wird, wenn die Iterationsabschlussbedingung nicht erfüllt ist.

11. System nach einem der Ansprüche 7 bis 10, wobei die mehreren lesbaren Dateien mehrere Webseiten repräsentieren.

## Revendications

1. Procédé de clustering, le procédé comprenant :
vectorisation (101) d'une pluralité de fichiers lisibles pour obtenir une pluralité de vecteurs de fichier chacun correspondant à un respectif des fichiers lisibles et présentant une série de nombres, chaque nombre représentant une valeur correspondant à une caractéristique du respectif des fichiers lisibles ;
obtention (102) d'un vecteur de caractéristique total selon les vecteurs de fichier, dans lequel une obtention du vecteur de caractéristique total selon les vecteurs de fichier comprend, pour chaque caractéristique des fichiers lisibles, une addition des valeurs respectives des vecteurs de fichier pour obtenir une valeur de caractéristique correspondante du vecteur de caractéristique total ; et
clustering (103) des fichiers lisibles selon un résultat de classement d'un degré de similarité respectif entre le vecteur de caractéristique total et chacun des vecteurs de fichier ;
**caractérisé en ce que** le procédé comprend en outre :
obtention (304) d'un vecteur représentatif pour chaque classe d'une pluralité de classes des fichiers lisibles selon le clustering des fichiers lisibles ;
construction (305) d'un nouveau vecteur de caractéristique satisfaisant une condition prédéfinie ;
calcul (203) d'un premier degré de similarité respectif entre le vecteur représentatif de chaque classe et le nouveau vecteur représentatif ;
exécution (204) d'un premier classement de chaque classe des fichiers lisibles selon les premiers degrés de similarité ;
calcul (205) d'un deuxième degré de similarité respectif entre le vecteur représentatif de chaque classe et un vecteur représentatif d'un dernière classe après le premier classement ;
exécution (206) d'un deuxième classement des vecteurs représentatifs après le premier classement selon les deuxièmes degrés de similarité ; et
re-clustering (310) des classes des fichiers lisibles selon les vecteurs représentatifs après le deuxième classement.

2. Le procédé tel que revendiqué à la revendication 1, dans lequel un clustering des fichiers lisibles selon le résultat de classement du degré de similarité respectif entre le vecteur de caractéristique total et chacun des vecteurs de fichier comprend en outre :
calcul d'un troisième degré de similarité respectif entre chacun des vecteurs de fichier et le vecteur de caractéristique total ;
exécution d'un premier classement des vecteurs de fichier selon les troisièmes degrés de similarité ;
calcul d'un quatrième degré de similarité respectif entre chacun des vecteurs de fichier et un dernier vecteur de fichier après le premier classement ;
exécution d'un deuxième classement des vecteurs de fichier classés après le premier classement selon les quatrièmes degrés de similarité ; et
clustering des fichiers lisibles selon les vecteurs de fichier classés après le deuxième classement.

3. Le procédé tel que revendiqué à la revendication 2, dans lequel un clustering des fichiers lisibles selon les vecteurs de fichier classés après le deuxième classement comprend :
pour chacun des vecteurs de fichier classés commençant à partir d'un deuxième vecteur de fichier après le deuxième classement, comparaison d'un vecteur de fichier courant à son vecteur de fichier précédent pour fournir un résultat de comparaison respectif ;
lorsque le résultat de comparaison satisfait une condition de clustering, clustering du vecteur de fichier courant et de son vecteur de fichier précédent en tant qu'une même classe ; et
lorsque le résultat de comparaison ne satisfait pas la condition de clustering, génération d'une nouvelle classe.

4. Le procédé tel que revendiqué à la revendication 2, dans lequel au moins un troisième degré de similarité ou quatrième degré de similarité respectif est calculé en utilisant une formule de cosinus angulaire de vecteur.

5. Le procédé tel que revendiqué à la revendication 1, dans lequel un re-clustering des classes des fichiers lisibles selon les vecteurs représentatifs après le deuxième classement comprend :
détermination de la satisfaction ou non d'une condition d'arrêt d'itération ;
si la condition d'arrêt d'itération est satisfaite, arrêt du procédé de clustering ; et
si la condition d'arrêt d'itération n'est pas satisfaite, itération d'étapes antérieures pour obtenir le vecteur représentatif de chaque classe selon le clustering des fichiers lisibles.

6. Le procédé tel que revendiqué à l'une des revendications 1 à 5, dans lequel la pluralité de fichiers lisibles représente une pluralité de pages Web.

7. Système de clustering, le système comprenant :
une unité de vectorisation (401) qui vectorise une pluralité de fichiers lisibles pour obtenir une pluralité de vecteurs de fichier chacun desquels correspondant à un respectif des fichiers lisibles et présentant une série de nombres, chaque nombre représentant une valeur correspondant à une caractéristique du respectif des fichiers lisibles ;
une unité d'extraction (402) qui obtient un vecteur de caractéristique total selon les vecteurs de fichier, dans lequel l'unité d'extraction est configurée pour additionner, pour chaque caractéristique des fichiers lisibles, les valeurs respectives des vecteurs de fichier pour obtenir une valeur de caractéristique du vecteur de caractéristique total ; et
une unité de clustering (403) qui met en cluster les fichiers lisibles dans une pluralité de classes des fichiers lisibles selon un résultat de classement d'un degré de similarité respectif entre le vecteur de caractéristique total et chacun des vecteurs de fichier ;
**caractérisé en ce que** le système comprend en outre :
une unité de récupération (602) qui récupère un vecteur représentatif de chaque classe de la pluralité de classes des fichiers lisibles ;
une unité de construction (603) qui fournit un nouveau vecteur de caractéristique satisfaisant une condition prédéfinie ;
une première unité de calcul (501) qui calcule un premier degré de similarité respectif entre le vecteur représentatif de chaque classe et le nouveau vecteur représentatif ;
une première unité de classement (502) qui effectue un premier classement de chaque classe des fichiers lisibles selon les premiers degrés de similarité ;
une deuxième unité de calcul (503) qui calcule un deuxième degré de similarité respectif entre le vecteur représentatif de chaque classe et un vecteur représentatif d'un dernière classe après le premier classement ;
une deuxième unité de classement (504) qui effectue un deuxième classement des vecteurs représentatifs classés après le premier classement ; et
une deuxième unité de clustering (601) qui remet en cluster les classes des fichiers lisibles selon les vecteurs représentatifs après le deuxième classement.

8. Le système tel que revendiqué à la revendication 7, dans lequel l'unité de clustering comprend :
une troisième unité de calcul qui calcule un troisième degré de similarité respectif entre chacun des vecteurs de fichier et le vecteur de caractéristique total ;
une troisième unité de classement qui effectue un premier classement des vecteurs de fichier selon les troisièmes degrés de similarité ;
une quatrième unité de calcul qui calcule un quatrième degré de similarité respectif entre chacun des vecteurs de fichier et un dernier vecteur de fichier après le premier classement ;
une quatrième unité de classement qui effectue un deuxième classement des vecteurs de fichier classés après le premier classement ; et
une troisième unité de clustering qui met en cluster les fichiers lisibles selon les vecteurs de fichier classés après le deuxième classement.

9. Le système tel que revendiqué à la revendication 8, dans lequel la troisième unité de clustering comprend :
une sous-unité de comparaison qui compare, pour chacun des vecteurs de fichier classés commençant à partir d'un deuxième vecteur de fichier après le deuxième classement, un vecteur de fichier courant à son vecteur de fichier précédent pour fournir un résultat de comparaison respectif ;
une sous-unité de clustering qui, lorsque le résultat de comparaison satisfait une condition de clustering, met en cluster le vecteur de fichier courant et de son vecteur de fichier précédent en tant que classe ; et
une sous-unité de génération qui, lorsque le résultat de comparaison ne satisfait pas la condition de clustering, génère une nouvelle classe.

10. Le système tel que revendiqué à la revendication 9, comprenant en outre :
une unité de détermination qui détermine si une condition d'arrêt d'itération est ou non satisfaite, arrête un processus de clustering si la condition d'arrêt d'itération est satisfaite, entraîne l'itération du processus de clustering pour obtenir un vecteur représentatif de chaque classe si la condition d'arrêt d'itération n'est pas satisfaite.

11. Le système tel que revendiqué à l'une des revendications 7 à 10, dans lequel la pluralité de fichiers lisibles représente une pluralité de pages Web.
